# DEMANDE DE BREVET EUROPEEN

(11) **EP 2 072 777 A1**
(43) Date de publication de la demande: **24.06.2009**
(21) Numéro de dépôt: 08291090.2
(22) Date de dépôt: 20.11.2008
(51) Int. Cl.: F02B 23/06

(54) **Procédé pour réaliser un mélange carburé pour un moteur à combustion interne à autoinflammation avec stratification de température du mélange carburé**

(30) Priorité: 18.12.2007 FR 0708893
(71) Demandeur: IFP, 92852 Rueil-Malmaison Cédex (FR)
(72) Inventeur: Pacaud, Pierre, 75016 Paris (FR); Thirouard, Benoist, 92500 Rueil Malmaison (FR)

(57) **Abrégé**

La présente invention concerne un procédé pour réaliser un mélange carburé pour un moteur à combustion interne de type à autoinflammation comportant au moins un cylindre (10) avec un corps de cylindre (12), une culasse (38), un piston (14) portant un bol (18) à l'intérieur duquel s'érige un téton (22), et une chambre de combustion (40) pour un mélange carburé délimitée par des parois de chambre constituées par la portion surfacique (42) de la culasse en regard du piston, la surface périphérique interne (44) du cylindre, la face supérieure (20) du piston et les parois de bol (24, 26, 28, 30, 32, 34, 36, 42, 44, 62).

Selon l'invention, le procédé consiste à réaliser au moins une partie d'au moins une paroi de chambre avec une matière ayant des caractéristiques thermiques différentes de la matière d'une autre paroi pour obtenir une stratification de la température du mélange carburé dans la chambre de combustion au terme de la phase compression dudit mélange.

## Description

La présente invention se rapporte à un procédé pour réaliser un mélange carburé pour un moteur à combustion interne à injection directe et à autoinflammation, notamment de type Diesel ou Essence.

Généralement, pour les moteurs de type Diesel, le processus d'autoinflammation et de propagation de la combustion du mélange carburé est très dépendante de l'état local de la température dans le cylindre du moteur, notamment dans la chambre de combustion et en particulier de la température des parois que forme cette chambre.

Ce constat est d'autant plus valable du fait de la richesse, de la dilution et de la température du mélange carburé sous forme gazeuse en mode de combustion de type homogène, plus connu sous le sigle de HCCI (Homogeneous Combustion Controlled Ignition). Durant ce mode, le carburant est injecté de manière à obtenir un mélange carburé homogène, puis ce mélange est comprimé et ensuite s'autoenflamme lorsque les conditions requises (pression et température du mélange carburé notamment) pour cette autoinflammation sont atteintes.

Il a été démontré que, pour ce type de fonctionnement HCCI, la température de parois de la chambre de combustion jouait un rôle prédominant sur la répartition des niveaux de températures au sein de la chambre de combustion et par conséquent sur l'autoinflammation de la charge.
Cette température pouvait influencer les paramètres de la combustion, comme le délai d'autoinflammation, la quantité brûlée lors de l'autoinflammation, la vitesse de combustion de la quantité du mélange carburé, ...

Dans le document EP 0303 444, il est prévu de munir d'un élément métallique conducteur thermiquement la surface interne d'un bol situé dans une tête de piston faisant partie de la chambre de combustion d'un moteur Diesel et sur lequel est injecté directement le carburant pour réaliser un mélange carburé dans ce bol.
Grâce à cela il est possible de maintenir une température élevée à l'intérieur du bol durant tout le fonctionnement du moteur tout en limitant les pertes thermiques aux parois, ce qui a pour avantage d'améliorer le rendement du cycle moteur.

Cependant, ce dispositif bien que donnant satisfaction a pour inconvénient majeur de générer des bruits de combustion néfastes au bon fonctionnement du moteur ainsi que des perturbations de la combustion du mélange carburé.
En effet, compte tenu de l'homogénéité du mélange carburé, son autoinflammation a lieu brutalement quasiment en même temps dans tout le bol.

La présente invention se propose de remédier aux inconvénients mentionnés ci-dessus grâce à un moteur qui comporte des éléments qui permettent de moduler le dégagement d'énergie lors de la combustion par autoinflammation du mélange carburé grâce à un gradient de température dans le milieu gazeux, et ce afin de provoquer un dégagement d'énergie plus progressif lors de l'autoinflammation.

A cet effet, la présente invention concerne un procédé pour réaliser un mélange carburé pour un moteur à combustion interne de type à autoinflammation comportant au moins un cylindre avec un corps de cylindre, une culasse, un piston portant un bol à l'intérieur duquel s'érige un téton, et une chambre de combustion pour un mélange carburé délimitée par des parois de chambre constituées par la portion surfacique de la culasse en regard du piston, la surface périphérique interne du cylindre, la face supérieure du piston et les parois de bol, caractérisé en ce qu'il consiste à réaliser au moins une partie d'au moins une paroi de chambre avec une matière ayant des caractéristiques thermiques différentes de la matière d'une autre paroi pour obtenir une stratification de la température du mélange carburé dans la chambre de combustion au terme de la phase compression dudit mélange.

Le procédé peut consister à réaliser au moins une partie d'au moins une paroi de chambre avec une matière ayant une conductivité thermique moindre que celle de la matière d'une autre paroi.

Le procédé peut consister à réaliser au moins une partie d'au moins une paroi de chambre avec un insert comportant une matière avec des caractéristiques thermiques différentes de la matière d'une autre paroi.

Le procédé peut consister à recouvrir au moins une partie d'au moins une paroi de chambre par un revêtement comportant une matière avec des caractéristiques thermiques différentes de la matière d'une autre paroi.

Le procédé peut consister à réaliser le revêtement d'au moins une partie d'au moins une paroi de chambre avec une d'épaisseur différente du revêtement d'au moins une partie d'au moins une autre paroi de chambre.

Le procédé peut consister à réaliser le revêtement d'au moins une partie d'au moins une paroi de chambre avec une composition différente du revêtement d'au moins une partie d'au moins une autre paroi de chambre.

Les autres caractéristiques et avantages de l'invention vont apparaître maintenant à la lecture de la description qui va suivre, donnée à titre uniquement illustratif et non limitatif, et à laquelle sont annexées :
- la figure 1 qui est une vue schématique en coupe axiale montrant un moteur à combustion interne utilisant le procédé selon l'invention et
- la figure 2 qui est une vue en coupe selon les flèches AA de la figure 1 montrant une vue partielle de la chambre de combustion du moteur selon l'invention.

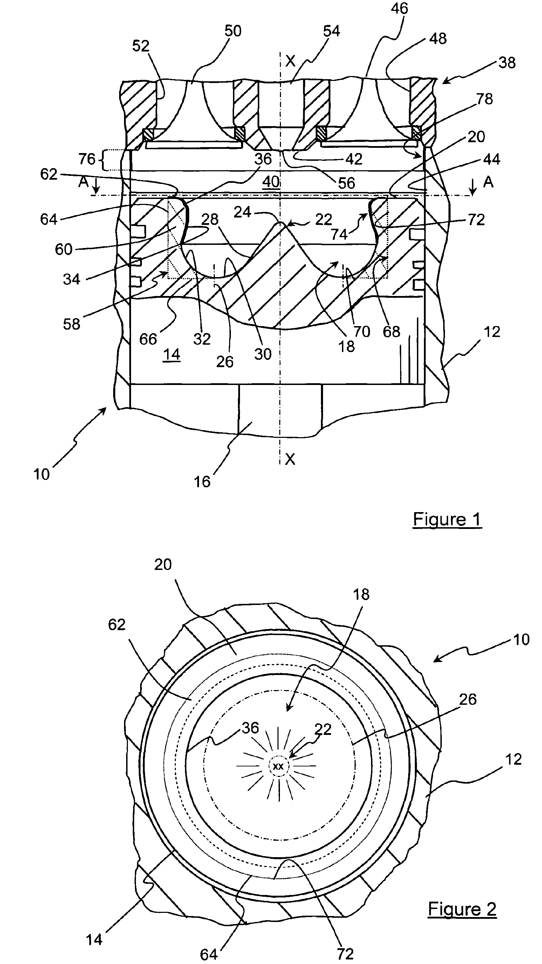

Ce moteur, comme illustré sur les figures 1 et 2, comprend au moins un cylindre 10 avec un corps de cylindre 12 d'axe XX à l'intérieur duquel coulisse un piston 14 en un mouvement translatif alternatif sous l'effet d'une bielle 16 raccordée à un vilebrequin (non représenté). Le haut du piston comprend un bol concave 18 qui est délimité par la face supérieure sensiblement horizontale 20 du piston. A l'intérieur de ce bol, est logé un téton 22 saillant en direction de la face 20 du piston. Ce téton, de forme générale tronconique, est situé sensiblement au centre de ce bol et comporte un axe coaxial avec l'axe du corps de cylindre.
En s'écartant symétriquement vers l'extérieur du piston 14 et de part et d'autre de l'axe XX, le sommet arrondi 24 du téton se poursuit, en direction du fond de bol 26 (symbolisé par un trait d'axe vertical) par un flanc incliné 28 sensiblement rectiligne, puis par une première partie curviligne 30 venant raccorder le flanc 28 au fond de bol 26, une deuxième partie curviligne 32 poursuivant le fond de bol et la première partie curviligne, une paroi latérale de bol 34 inclinée en direction du téton tout en étant raccordée à la deuxième partie curviligne et un congé 36 raccordant la paroi latérale 34 à la face horizontale supérieure 20 du piston 14.

Bien entendu, le fond 26 du bol 18 peut comprendre toutes surfaces, telle qu'une surface plane, venant raccorder les parties curvilignes entre elles.

Le cylindre est fermé en partie haute par une culasse 38 en formant une chambre de combustion 40 délimitée par des parois de chambre constituées par la portion surfacique 42 de la culasse 38 en regard du piston 14, la surface périphérique interne 44 du corps de cylindre, la face supérieure 20 du piston, et par les parois de bol constituées par le sommet arrondi 24 du téton 22, le flanc incliné 28, les première et deuxième parties curvilignes 30, 32, le fond de bol 26, la paroi latérale inclinée 34 et le congé 36 raccordant la paroi latérale 34 à la face horizontale supérieure 20 du piston 14.

La culasse porte au moins un moyen d'admission avec une soupape d'admission 46 et une tubulure d'admission 48, et au moins un moyen d'échappement avec une soupape d'échappement 50 et une tubulure d'échappement 52.

Des moyens d'injection de carburant à l'intérieur de la chambre de combustion 40 sont disposés dans la culasse 38 en étant disposés dans l'axe XX. Ces moyens d'injection comportent un injecteur de carburant 54, de préférence un injecteur multi-jets. Cet injecteur comporte au voisinage de son nez 56, une multiplicité d'orifices ou trous à travers desquels est pulvérisé le carburant dans la chambre de combustion et notamment en direction du bol 18.

Comme illustré sur les figures, au moins une partie d'au moins une paroi formant la chambre de combustion est constituée d'une matière présentant des caractéristiques thermiques différentes de la matière d'une autre paroi ou du reste de cette paroi.

Ainsi, en se rapportant plus précisément au piston 14, ce dernier comporte un insert 58 (symbolisé en traits pointillés) portant une partie des parois du bol, cet insert étant constitué d'une matière qui a des caractéristiques thermiques différentes de la matière constitutive des autres parois du bol et préférentiellement des parois restantes de la chambre de combustion.

Plus précisément, comme mieux visible sur la figure 1, l'insert 58 est sous forme d'une bague 60 d'axe longitudinal sensiblement confondu avec l'axe XX et comportant, sur sa périphérie interne, la deuxième partie curviligne 32, la paroi latérale 34, le congé 36 et une partie plane horizontale 62. La périphérie externe de cette bague comporte une surface périphérique externe verticale 64 issue de l'extrémité libre de la partie 62. Cette surface verticale vient rejoindre une paroi de fond 66 plane sensiblement orthogonale à la surface périphérique 64 et issue de l'extrémité libre de la deuxième partie curviligne 32. Cette paroi de fond 66 ainsi que la partie plane 62 forment les extrémités de l'insert.
Cet insert est prévu pour être mis en place dans un évidement 68 de forme extérieure complémentaire prévu dans le piston. Cet évidement comporte le téton 22, le flanc incliné 28, la première partie curviligne 30 ainsi qu'une face horizontale 70 comprenant le fond de bol tout en prolongeant la première partie curviligne 30 et aboutissant à un flanc vertical 72 arrivant à la face 20.
Cet évidement est conformé d'une manière telle que, lors de la mise en place de l'insert dans l'évidement, la deuxième partie curviligne 32, la paroi latérale 34 et le congé 36 soient en regard du téton 22. Au terme de cette mise en place, la surface périphérique 64 de l'insert est confondue avec le flanc vertical 72 alors que la paroi de fond 66 est confondue avec la face horizontale 70 et la partie plane 62 est dans le même plan de la face supérieure 20 du piston 14.

Cet insert est réalisé dans une matière, comme un acier réfractaire ou de la céramique, qui possède des propriétés thermiques (conductivité thermique, capacité thermique, inertie thermique, ...) différentes de la matière constitutive des autres parois du bol.

Cet insert est ainsi maintenu fixement dans l'évidement par tous moyens connus, comme un montage à force, un surmoulage du reste du piston sur cet insert, un soudage par brasage, ...

Avantageusement mais non exclusivement, cet insert peut être constitué d'une matière avec une conductivité thermique moindre et/ou une inertie thermique plus grande que celle de la matière des autres parois de bol et de la chambre de combustion.

Ainsi, la deuxième partie curviligne 32, la paroi latérale 34, le congé 36 et la partie plane 62 possèdent notamment des caractéristiques isolantes thermiquement alors que le sommet arrondi 24 du téton 22, le flanc incliné 28, la première partie curvilignes 30 sont de la même matière que le piston, qui est constitué d'une matière conductrice de chaleur, généralement en une matière à base d'alliage d'aluminium.

De ce fait, lors de la compression du mélange carburé présent dans la chambre de combustion, ce mélange carburé conserve toute son énergie calorifique au niveau des zones du bol en regard de la deuxième partie curviligne 32, la paroi latérale 34, le congé 36 et la partie plane 62, et cela compte tenu de l'isolation thermique réalisée par l'insert entre l'intérieur du bol et le reste du piston. A l'opposé, le mélange carburé présent au niveau des zones du sommet arrondi 24 du téton 22, du flanc incliné 28 et de la première partie curviligne 30 est à une température beaucoup plus basse du fait des pertes thermiques avec l'ensemble des parois.
De plus, le mélange carburé présent dans le reste de la chambre de combustion au dessus de la face supérieure du piston est également à une température plus basse, généralement due aux pertes thermiques avec la culasse et le corps du cylindre.

Il se produit ainsi une stratification de température du mélange carburé dans le bol entre une zone chaude du mélange au voisinage de la deuxième partie curviligne 32, la paroi latérale 34, le congé 36 et la partie plane 62, et une zone froide située au voisinage du sommet arrondi 24 du téton 22, du flanc incliné 28 et de la première partie curviligne 30.
Dans cette configuration, la stratification de la température du mélange carburé est radiale avec une décroissance de cette température entre la périphérie interne du bol (deuxième partie curviligne 32, paroi latérale 34, congé 36, partie plane 62) et son centre (téton 22). Cette décroissance est également axiale entre le bol et le reste de la chambre de combustion compte tenu également des pertes thermiques entre le mélange carburé et la surface périphérique interne du cylindre 44 ainsi que la portion surfacique 42 de la culasse.

De ce fait, après la fin de la phase de compression de ce moteur au voisinage du point mort haut du piston, le mélange carburé atteint sa température d'autoinflammation en premier lieu au niveau de la périphérie interne du bol (deuxième partie curviligne 32, paroi latérale 34, congé 36, partie plane 62). L'énergie dégagée par cette combustion entraîne une élévation de pression dans la chambre de combustion et par conséquent une élévation du niveau de température globale. Cette élévation du niveau de température est obtenue en préservant l'existence des gradients thermiques dans les gaz non brûlés. L'élévation du niveau de température permet ainsi de réaliser progressivement l'autoinflammation de ce mélange.

Grâce à cela, il se produit une inflammation progressive du mélange carburé des zones chaudes vers les zones froides et non plus une inflammation subite et brutale de la totalité de ce mélange dans la chambre de combustion.

Bien entendu et cela sans sortir du cadre de l'invention, il peut être prévu de disposer une multiplicité de portions d'insert réparties régulièrement circonférentiellement autour de l'axe XX de façon à obtenir un bol avec une succession de portions périphériques de bol constituées de matières différentes.

Il peut être également envisagé de recouvrir tout ou partie des parois de la chambre de combustion par un revêtement constitué d'une matière qui possèdent des propriétés thermiques (conductivité thermique, capacité thermique, inertie thermique, ...) différentes de la matière constitutive des autres parois de cette chambre pour obtenir une stratification de la température du mélange carburé.

Plus précisément et comme illustré sur la figure 1, il peut être prévu que le congé 36 et la paroi latérale 34 du bol par exemple comporte un revêtement 74, tel qu'une céramique de préférence isolante thermiquement, de sorte que la température du mélange carburé à ces endroits soit élevée.

Ce revêtement peut être déposé sur la ou les parois concernées par tous moyens connus par l'homme du métier, comme par projection.

Il est encore possible de mieux réaliser un gradient de température en faisant varier l'épaisseur de ce revêtement entre deux parois consécutives ou non.

A titre d'exemple, le revêtement du congé 36 peut être d'épaisseur plus faible que l'épaisseur du revêtement de la paroi latérale 34.
Dans cette configuration, une stratification de la température du mélange carburé est réalisée non seulement pour le mélange en regard du congé et pour le mélange en regard de la paroi inclinée mais aussi pour le reste du mélange présent dans la chambre de combustion.
De ce fait, la combustion du mélange carburé se réalisera en trois phases, une première phase de combustion qui débutera en regard du congé 36 puis se poursuivant par une combustion en regard de la paroi inclinée 36 et enfin une combustion dans le reste de la chambre de combustion.

A titre de variante, il peut être envisagé de ne revêtir que circonférentiellement localement le congé et/ou la paroi inclinée de la matière concernée ou de disposer sur une paroi, par exemple sur le congé, un revêtement avec une matière de caractéristiques thermiques différentes du revêtement déposé sur une autre paroi, telle que la paroi inclinée.

Il est également possible de revêtir tout ou partie d'au moins une portion 76 de la surface périphérique interne 44 du cylindre par un revêtement isolant 78, comme mentionné ci-dessus.
Ainsi, la portion cylindrique 76 de la surface périphérique 44 est constituée d'une matière qui a des caractéristiques thermiques différentes de la matière constitutive du reste de cette surface périphérique.

Ceci permet d'obtenir, soit une stratification de température complémentaire à celle déjà réalisée dans le bol, soit uniquement une stratification de température du mélange carburé au dessus de la face supérieure 20 du piston dans le cas où le bol ne comprend pas de matière permettant de réaliser une stratification de température.

Ainsi, grâce à l'invention il est possible d'obtenir une stratification de la température du mélange carburé en réalisant des gradients de température à des endroits choisis de la chambre de combustion.

La présente invention n'est pas limité aux exemples décrits ci-dessus mais englobe toutes variantes et tous équivalents.

Notamment, la différence de matière ayant des caractéristiques thermiques différentes, telle que décrite ci-dessus pour le bol, peut être aussi envisagée pour toutes autres associations de parois de la chambre de combustion, comme entre la culasse et le piston et/ou la culasse et la surface périphérique du cylindre.

## Revendications

1. Procédé pour réaliser un mélange carburé pour un moteur à combustion interne de type à autoinflammation comportant au moins un cylindre (10) avec un corps de cylindre (12), une culasse (38), un piston (14) portant un bol (18) à l'intérieur duquel s'érige un téton (22), et une chambre de combustion (40) pour un mélange carburé délimitée par des parois de chambre constituées par la portion surfacique (42) de la culasse en regard du piston, la surface périphérique interne (44) du cylindre, la face supérieure (20) du piston et les parois de bol (24, 26, 28, 30, 32, 34, 36, 42, 44, 62), **caractérisé en ce qu'**il consiste à réaliser au moins une partie d'au moins une paroi de chambre avec une matière ayant des caractéristiques thermiques différentes de la matière d'une autre paroi pour obtenir une stratification de la température du mélange carburé dans la chambre de combustion au terme de la phase compression dudit mélange.

2. Procédé pour réaliser un mélange carburé pour un moteur à combustion interne selon la revendication 1, **caractérisé en ce qu'**il consiste à réaliser au moins une partie d'au moins une paroi de chambre (20, 24, 26, 28, 30, 32, 34, 36, 42, 44, 62) avec une matière ayant une conductivité thermique moindre que celle de la matière d'une autre paroi.

3. Procédé pour réaliser un mélange carburé pour un moteur à combustion interne selon la revendication 1, **caractérisé en ce qu'**il consiste à réaliser au moins une partie d'au moins une paroi de chambre avec un insert (58) comportant une matière avec des caractéristiques thermiques différentes de la matière d'une autre paroi.

4. Procédé pour réaliser un mélange carburé pour un moteur à combustion interne selon la revendication 1, **caractérisé en ce qu'**il consiste à recouvrir au moins une partie d'au moins une paroi de chambre par un revêtement (74, 76) comportant une matière avec des caractéristiques thermiques différentes de la matière d'une autre paroi.

5. Procédé pour réaliser un mélange carburé pour un moteur à combustion interne selon la revendication 4, **caractérisé en ce qu'**il consiste à réaliser le revêtement d'au moins une partie d'au moins une paroi de chambre (36) avec une d'épaisseur différente du revêtement d'au moins une partie d'au moins une autre paroi de chambre (34).

6. Procédé pour réaliser un mélange carburé pour un moteur à combustion interne selon la revendication 4 ou 5, **caractérisé en ce qu'**il consiste à réaliser le revêtement d'au moins une partie d'au moins une paroi de chambre (36) avec une composition différente du revêtement d'au moins une partie d'au moins une autre paroi de chambre (34).
